# EUROPEAN PATENT APPLICATION

(11) **EP 2 941 959 A1**
(43) Date of publication of application: **11.11.2015**
(21) Application number: 15166873.8
(22) Date of filing: 08.05.2015
(51) Int. Cl.: A22C 17/00, A22C 17/08

(54) **AUTOMATED CLEANING EQUIPMENT FOR CURED PRODUCTS**

(30) Priority: 09.05.2014 ES 201430683
(71) Applicant: Of Course Solutions, S.L., 17800 Olot (ES)
(72) Inventor: Morejón Arjona, Juan, 17800 Olot (ES)
(74) Representative: Morgades y Manonelles, Juan Antonio

(57) **Abstract**

This invention is based on automating cleaning systems for cured food products, using a sweeping cleaning system (15), as well as greater precision in cleaning and more safety when using the equipment, with different chambers of action and means for control and detection that enable the work and safety parameters of the equipment to be adjusted, especially the automated nozzles.

## Description

### Object of the Invention.

This invention consists in an automated cleaning machine, preferably continuous for cured food products, such as hams, cold meats and similar.

### State of the Art:

When making cured products, especially cold meats, ham and similar products, their surface is inevitably exposed basically to mites and mould, as they offer the right conditions for these organisms to thrive.

As only some of these organisms take an active part in the curing process (regulating pH, fermentation and contributing to control the degree of drying out of the products), imbalances in the delicate equilibrium that enable crossed contamination with pathogens or the proliferation of pests are common.

The selective sowing of functional strains of organisms are known, bathing with fungicides or bactericides, coating with lard or fat, and/or coating with wax, which is intended to avoid these harmful organisms entering the products being cured and to control these pests.

Spanish Patent No. 201130686 held by the same applicant, refers to a cleaning system using dry ice, cleaning by means of the impact of cryogenic gas launched by nozzles on a fixed frame, with partially manual characteristics and orientations, which reduces the speed of continuous production of these products.

### Description of the Invention:

The aim of this invention is to introduce some elements of automation and cleaning that will enable increased production of these cured foods, by using a sweeping cleaning method, as well as greater safety when using the equipment.

The invention presented is materialised in a piece of cleaning equipment formed by a frame on the outside and a protective and safety casing. This casing incorporates means for control by users, enabling it to start and stop the process, as well as indicating the position of the product to be cleaned. The casing also avoids user access to the inside and has safety systems to detect access, protecting the user from the action of the cleaning process, and insulating the exterior from the noise produced by the cleaning activities.

Inside this casing there are means for moving the product to be cleaned, with means for securing it. There are also other systems that detect the product that enters the equipment, with means for processing this information.

The means for moving are adapted to the means for loading the products on the production lines, as well as the means for unloading from these lines, allowing great flexibility for integration in the final production system where the equipment is to be fitted. This adaptation is due to the automation of these means for transport, as well as means for processing and control managed by these means for transport and the automated operation of the rest of the equipment, obtaining information from the means for detection automatically and/or from the controls handled by the user.

The means for holding the products to be cleaned allow fixed placement, with no significant swinging, so they can be correctly detected, as well as correctly cleaned. In the same manner, the transport system may have securing points for the product to be cleaned, allowing it to be sloping, rotated or turned over to carry out thorough cleaning.

The cleaning equipment for cured products has at least one booth before the cleaning booth, where the product to be cleaned receives pre-treatment. These actions prior to the cleaning of the product constitute preparation to make the cleaning in the next stage more effective, allowing the inclusion of several pieces of complementary equipment.

In a better way than in current systems, the equipment contains, in addition to this prior pre-treatment booth, a cleaning booth with an automated system with nozzles totally mobile on the three axes - oaf movement, with at least one articulated arm, and with at least one nozzle for spraying the cleaning product. This cleaning product will preferably use pellets of cryogenic product such as dry ice or carbon dioxide.

The automated system enables the nozzle to be placed in the required position and angle for effectively cleaning the cured product, because the spraying location, angle and pressure will be different for a product such as a ham compared to loin, for example.

Action and adjustment in this case is totally automatic, thanks to the means for processing and control, obtaining information from the detectors to establish the robot arm configuration, so it will carry out efficient cleaning of the product. Users can also predetermine the action parameters of each of the elements in the equipment according to their needs.

This means of processing and control of information will adjust the position of the articulated arm to locate the spray nozzle for cleaning and will adjust how it is projected, i.e., time, angle and pressure, adapting the configuration of its parameters automatically according to the product detected or indicating what has entered the equipment. It will also act on the means for transport and attachment if necessary, according to the product and the adaptation to the production line where the equipment is installed.

Alternatively, several arms can be used to increase cleaning speed, as well as several nozzles per arm to enable greater versatility of the articulated robot arm.

In addition to these components, the equipment also has the habitual systems for collecting waste material and extraction of fumes created. The equipment also has acoustic insulation based on placing the ventilation system in chambers within the casing of the equipment, which also avoids concentration of residual gases.

This acoustic insulation system can be complemented with acoustic insulation of the parts that surround the casing of the equipment, to minimise noise emissions while cleaning.

The advantageous configuration of the equipment enables it to be provided with manual fed or continuous cleaning, automated in such a manner that it enable efficient cleaning of a larger number of products, and in greater variety without having to intervene manually. All of this offers great flexibility in adapting to production processes, scalability and the possibility of adding different and multiple cameras to the equipment and the process, adaptation of the equipment to pretreatments necessary for each product to be cleaned, and for the means for loading and unloading products on the production lines.

The entire cleaning process is done without using water, which contributes to savings and the environmental footprint, as well as reducing the risk of finding Listeria Monocytogenes ("listeriosis") due to the design of the equipment and the surface treatment to the entire surface of the cured product.

Other details and features will be set out over the course of the description below, showing a practical manufacture of the invention as an illustration, without limiting it to that use.

### Description of the drawings.

Figure 1 is an elevation side view of the automated cleaning equipment.
Figure 2 is a plan view of the automated cleaning equipment.

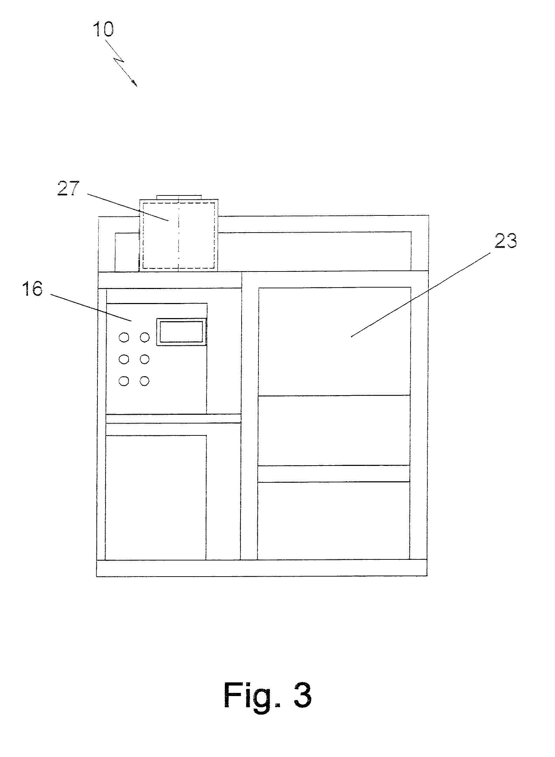

Figure 3 is an elevation front view of the automated cleaning equipment.

### Description of an embodiment of the invention.

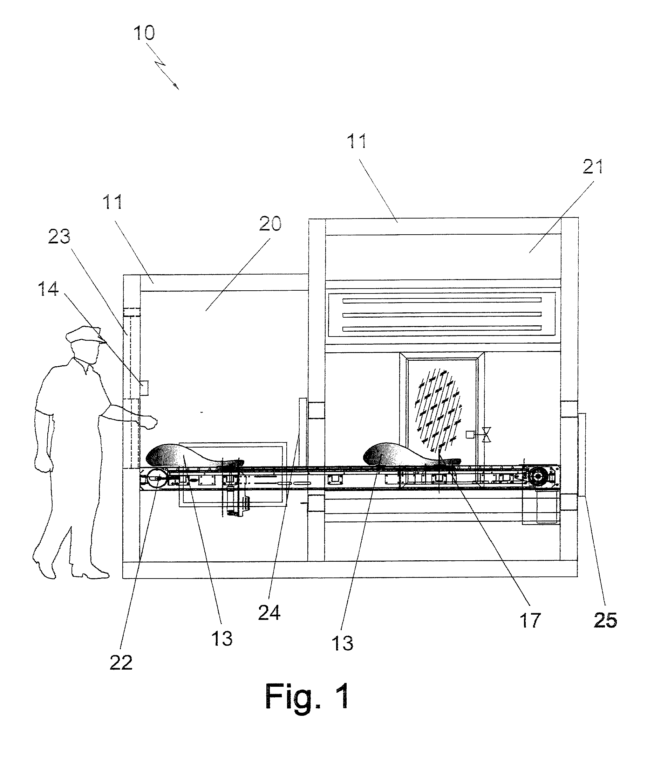

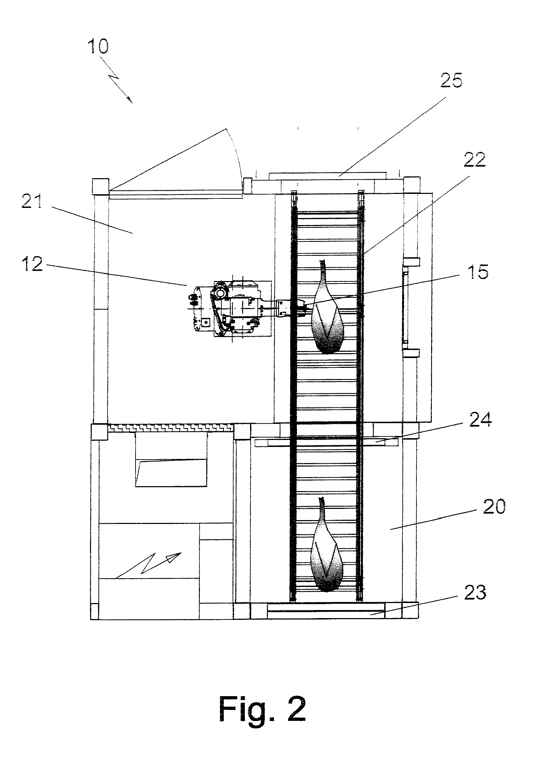

In one of the preferred embodiments of the invention, as can be seen in Figures 1 and 2, the cleaning equipment (10) is formed by a frame and an external casing (11) that completely envelops the inside of the equipment (10) and isolates it from the outside, in the inside of which is a pre-booth (20) for prior treatments and a cleaning booth (21), inside which the product (13) to be cleaned moves, thanks to a motorised conveyor (22).

In the pre-booth (20) where the preparation for the product (13) to be cleaned in the equipment (10) is carried out so its cleaning will be as effective as possible, there is the possibility to carry out prior treatments such as cooling, brushing or changing position, as well as elements of product (13) detection (14). For this purpose, the pre-cabin (20) has the corresponding means for cooling, brushing and modifying the position of the product (13). To detect the product there are preferably scanning detection elements (14) or morphological product (13) recognition elements.

The cleaning chamber has a robot in the form of an articulated automated arm (12), which is governed by a means for processing and control that collects information on the product (13) to be cleaned on entering the machine (10), by detectors (14) and/or user control means (16) that have references of the shape of the product (13) and identify it. These detection (14) and control means (16) may incorporate code-reading systems, radiofrequency label sensors or morphological recognition systems, such as artificial vision.

The conveyor (22) has means (17) for securing the product (13) so that it does not swing, and it can be kept in the same position or rotated, as required by the processing for the most effective cleaning, executed by the robot arm (12) according to the data provided by the detectors (14) on the type of product (13).

The processing and control resources also at on the conveyor, to coordinate the movement of the product (13), as well as automating, if necessary, the production line where the equipment (10) is installed.

Once the form of the product (13), the means for processing moves the arm (12) to locate it in the correct position for the nozzles (15) at the end of the arm (12) to carry out the work. In addition to placement, the means for processing information configures the parameter used by the nozzles (15) to expel the cleaning product, both pressure and time in each position.

The cleaning product use in the present embodiments is habitually pellets of gas solidified by cryogenisation.

In this cleaning action, the processes carried out emit significant noise, therefore the entrance (23) to the equipment (10) through the pre-booth (20) as well as the entry (24) to the cleaning booth (21) and exit (25) from the machine (10) are prepared with automatic doors of the guillotine type, which are closed during the process, both for reducing noise and for safety to impede access to the inside while the machine (10) is in operation.

The ventilation equipment (27) for the chambers (20, 21) is also designed for acoustic insulation as well as elimination of gases.

The means for processing and control have sensors and buttons to stop the machine (10) if there is a worker inside or the door in not properly closed.

Having sufficiently described this invention using the Figures attached, it is easy to understand that any changes judged to be suitable may be made, whenever these changes do not alter of the essence of the invention summarised in the following claims.

## Claims

1. **- "AUTOMATED CLEANING EQUIPMENT FOR CURED PRODUCTS"** used for cleaning cured food products by launching cleaning products inside a casing into which these food products are placed, with means for movement of the products, nozzles for spraying the cleaning product, means for collecting the waste, means for extracting the gases, **characterised in that** the equipment has at least one booth for pre-treatment of the product and a booth for cleaning, through which there is an automated transport system and the cleaning booth has a robot arm with nozzles that can move on all three axes, with at least one nozzle for spraying the cleaning products and means for detecting the product to be cleaned, with means for processing and control that collect information on the type of product to be cleaned and/or the user's requirements, automatically adjusting the action of the nozzles and the transport system according to this information.

2. **- "AUTOMATED CLEANING EQUIPMENT FOR CURED PRODUCTS"** according to the claim 1, **characterised in that** the cleaning product is pellets of gas solidified by cryogenisation.

3. **- "AUTOMATED CLEANING EQUIPMENT FOR CURED PRODUCTS"** according to the claim 1, **characterised in that** the nozzle is fitted in a robot arm.

4. **- "AUTOMATED CLEANING EQUIPMENT FOR CURED PRODUCTS"** according to the claim 1, **characterised in that** the detection means incorporate morphological and presence recognition means.

5. **- "AUTOMATED CLEANING EQUIPMENT FOR CURED PRODUCTS"** according to the claim 1, **characterised in that** the detection means incorporate graph encoding recognition means and radiofrequency label means.

6. **- "AUTOMATED CLEANING EQUIPMENT FOR CURED PRODUCTS"** according to the claim 1, **characterised in that** the means for processing and control incorporate means for control of handling by the user.

7. **- "AUTOMATED CLEANING EQUIPMENT FOR CURED PRODUCTS"** according to the claim 1, **characterised in that** the means for processing and control adjusts the nozzles as well as characteristics such as pressure and time the product is sprayed, as well as controlling the transport and securing system

8. **- "AUTOMATED CLEANING EQUIPMENT FOR CURED PRODUCTS"** according to the claim 1, **characterised in that** the cleaning equipment has ventilation equipment designed to attenuate the emission of noise from the booths.

9. **- "AUTON1ATED CLEANING EQUIPMENT FOR CURED PRODUCTS"** according to the claim 1, **characterised in that** the cleaning equipment has automatic doors guillotine type doors to isolate the pre-booth as well as the cleaning booth from each other as well as from the exterior.

10. **- "AUTOMATED CLEANING EQUIPMENT FOR CURED PRODUCTS"** according to the claim 1, **characterised in that** the pre-treatment booth has cooling means.

11. **- "AUTOMATED CLEANING EQUIPMENT FOR CURED PRODUCTS"** according to the claim 1, **characterised in that** the pre-treatment booth has brushing means.

12. **- "AUTOMATED CLEANING EQUIPMENT FOR CURED PRODUCTS"** according to the claim 1, **characterised in that** the pre-treatment booth has means for modifying the position or placement of the product.

13. **- "AUTOMATED CLEANING EQUIPMENT FOR CURED PRODUCTS"** according to the claim 1, **characterised in that** the means for transporting the products incorporate means for securing the product to be cleaned.

14. **- "AUTOMATED CLEANING EQUIPMENT FOR CURED PRODUCTS"** according to the claim 1, **characterised in that** the means for securing the product to be cleaned have means for rotating, sloping and turning the product.
